Europäisches Patentamt

European Patent Office

Office européen des brevets

(19)

(11) Veröffentlichungsnummer: **0 193 993**
**A2**

(12) # EUROPÄISCHE PATENTANMELDUNG

(21) Anmeldenummer: 86200310.0

(22) Anmeldetag: 28.02.86

(51) Int. Cl.⁴: **G 02 B 5/18, G 02 B 6/26**

(30) Priorität: 04.03.85 DE 3507513

(43) Veröffentlichungstag der Anmeldung: 10.09.86
Patentblatt 86/37

(84) Benannte Vertragsstaaten: DE FR GB IT SE

(71) Anmelder: **Philips Patentverwaltung GmbH,
Billstrasse 80, D-2000 Hamburg 28 (DE)**

(84) Benannte Vertragsstaaten: **DE**

(71) Anmelder: **N.V. Philips' Gloeilampenfabrieken,
Groenewoudseweg 1, NL-5621 BA Eindhoven (NL)**

(84) Benannte Vertragsstaaten: **FR GB IT SE**

(72) Erfinder: **Dammann, Hans, Dr., Eichenstrasse 27,
D-2081 Tangstedt (DE)**
Erfinder: **Noll, Joachim, Dipl.-Ing., Charlottenstrasse 11,
D-5100 Aachen (DE)**

(74) Vertreter: **Koch, Ingo et al, Philips Patentverwaltung
GmbH Billstrasse 80 Postfach 105149,
D-2000 Hamburg 28 (DE)**

(54) **Digitales Phasengitter für einen optischen Leistungs- und Farbteiler.**

(57) Die Erfindung betrifft ein digitales Phasengitter für einen optischen Leistungs- und Farbteiler, welcher ein Mischbündel aus optischen Signalen zweier verschiedener Wellenlängen $\lambda_1$ und $\lambda_2$ in Einzelbündel aufteilt, die räumlich voneinander getrennt sind und jeweils nur Signale einer einzigen Wellenlänge führen, wobei für jede Wellenlänge mindestens zwei Einzelbündel gebildet werden. Um die Anzahl der optischen Komponenten zu verringern, wird vorgeschlagen, dass die Struktur des Phasengitters hinsichtlich Stufenbreite, optischer Wegdifferenz (Stufenhöhe) und Stufenabstand entsprechend einer Überlagerung zweidimensionaler Stufenstrukturen eines gedachten binären leistungsteilenden Phasengitters $G_1$ mit der optischen Wegdifferenz $S_1$, welches die Signale der Wellenlänge $\lambda_1$ in ungerade Beugungsordnungen zu verteilen vermag, sowie eines gedachten binären leistungsteilenden Phasengitters $G_2$ mit der optischen Wegdifferenz $S_2$, welches die Signale der Wellenlänge $\lambda_2$ in gerade Beugungsordnungen zu verteilen vermag, in der Weise, dass die gedachten Gitter für die jeweils fremde Wellenlänge beugungslos durchlässig sind.

Digitales Phasengitter für einen optischen Leistungs- und Farbteiler

Die Erfindung bezieht sich auf ein digitales Phasengitter für einen optischen Leistungs- und Farbteiler, welcher ein Mischbündel aus optischen Signalen zweier verschiedener Wellenlängen $\lambda_1$ und $\lambda_2$ in Einzelbündel aufteilt, die räumlich voneinander getrennt sind und jeweils nur Signale einer einzigen Wellenlänge führen, wobei für jede Wellenlänge mindestens zwei Einzelbündel gebildet werden.

Bei derartigen bekannten Anordnungen sind mehrere Komponenten erforderlich, nämlich einerseits farbteilende Komponenten (Farbdemultiplexer), welche z.B. auf einem Lichtwellenleiter mit den optischen Frequenzen $\lambda_1$ und $\lambda_2$ ankommendes Signallicht in zwei räumlich getrennte Einzelbündel der Wellenlängen $\lambda_1$ und $\lambda_2$ aufspalten, und andererseits Leistungsteiler, welche die Bündel jeder Wellenlänge wiederum in mehrere Einzelbündel möglichst gleicher Leistung aufteilen.

Es ist bekannt, als optische Komponenten für Gitteranordnungen digitale Phasengitter zu verwenden. Dabei handelt es sich um reflektierende oder transparente Gebilde, welche aus einer Grundplatte mit darauf angeordneten Stegen vorbestimmter Höhe und Breite bestehen, die in periodischer Abstandsanordnung wiederkehren (vergl. "Physik in unserer Zeit", 11. Jahrgang, Mai 1980, Seite 83 bis 91).

Der Erfindung liegt die Aufgabe zugrunde, eine Anordnung der eingangs genannten Art derart zu gestalten, daß möglichst wenig optische Komponenten benötigt werden.

Die Lösung gelingt dadurch, daß die Struktur des Phasengitters hinsichtlich Stufenbreite, optischer Wegdifferenz (Stufenhöhe) und Stufenabstand entsprechend einer Überlagerung zweidimensionaler Stufenstrukturen eines gedachten binären leistungsteilenden Phasengitters $G_1$ mit der Wegdifferenz $S_1$, welches die Signale der Wellenlänge $\lambda_1$ in ungerade Beugungsanordnungen zu verteilen vermag, sowie eines gedachten binären leistungsteilenden Phasengitters $G_2$ mit der Wegdifferenz $S_2$, welches die Signale der Wellenlänge $\lambda_2$ in gerade Beugungsanordnungen zu verteilen vermag, dimensioniert ist, so daß ein resultierendes Phasengitter mit den periodisch wiederkehrenden Wegdifferenzen $S_1$, $S_2$ und $S_3 = S_1 + S_2$ entsteht, wobei die optischen Wegdifferenzen $S_1$ und $S_2$ wie folgt gewählt sind:

$$\frac{S_1}{\lambda_1} = \left( \frac{\Delta\varphi_1}{2\pi} + K_1 \right) \quad und \quad \frac{S_2}{\lambda_2} = \left( \frac{\Delta\varphi_2}{2\pi} + K_2 \right)$$

wobei $\Delta\varphi_1$ bzw. $\Delta\varphi_2$ $\angle 2\pi$ Phasensprungwinkel der gedachten binären Phasengitter und $k_1$ bzw. $k_2$ ganze natürliche Zahlen sind, welche folgenden Bedingungen genügen:

$$K_1 = \frac{\lambda_2}{\lambda_1} \cdot g_1 - \frac{\Delta\varphi_1}{2\pi} \quad und \quad K_2 = \frac{\lambda_1}{\lambda_2} \cdot g_2 - \frac{\Delta\varphi_2}{2\pi}$$

wobei $g_1$ und $g_2$ wiederum ganze natürliche Zahlen sind.

Vorteilhafte Weiterbildungen der Erfindung sind in den Unteransprüchen gekennzeichnet.

Ein erfindungsgemäß ausgebildetes einziges Phasengitter wirkt gleichzeitig als Leistungsteiler und als Wellenlängen-Demultiplexer (Farbteiler). Auf einem Lichtwellenleiter mit den Wellenlängen $\lambda_1$ und $\lambda_2$ ankommendes Licht wird nach Wellenlängen getrennt und gleichzeitig für jede Wellenlänge auf mehrere abgehende Lichtwellenleiter verteilt.

Die Gitterstruktur der erfindungsgemäßen kompakten Komponente besteht aus einer Überlagerung zweier gedachter binärer, für jeweils eine der Wellenlängen $\lambda_1$ und $\lambda_2$ leistungsteilender Gitterstrukturen. Das Prinzip und die Anwendung solcher mikrooptischer Leistungsteiler, welche das auf einer LWL ankommende Signallicht einer bestimmten Wellenlänge mit hohem Wirkungsgrad auf typischerweise zwei bis zehn Ausgangs-LWL verteilen, sind durch die DE-OS 29 16 184, durch "Optica acta" 1977, Band 24, Seiten 505 bis 515, und durch "Fiber and Integrated Optics", Band 4, Seiten 159 bis 167, bekannt.

Die im Hinblick auf die Wellenlängen $\lambda_1$ und $\lambda_2$ bemessenen optischen Wegdifferenzen $s_1$ und $s_2$ der gedachten, zu überlagernden binären Gitter $G_1$ und $G_2$ dürfen verschiedene Werte annehmen, die sich durch ganzzahlige Vielfache von $\lambda_1$ bzw. $\lambda_2$ voneinander unterscheiden:

$$\frac{s_1}{\lambda_1} = \frac{\Delta\varphi_1}{2\pi} + K_1 \quad und \quad \frac{s_2}{\lambda_2} = \frac{\Delta\varphi_2}{2\pi} + K_2$$

wobei sich die Wirkungen der Gitter für nicht zu große Werte von k praktisch nicht ändern. $\Delta\varphi_1$ und $\Delta\varphi_2$ sind charakteristische Phasensprungwinkel, welche gemäß dem genannten Stand der Technik unter der Voraussetzung bestimmt sind, daß ein eingehender Lichtstrahl der zugehörigen Wellenlänge in mehrere annähernd leistungsgleiche räumlich getrennte Strahlen aufgeteilt wird.

$k_1$ und $k_2$ sind ganze natürliche Zahlen und geben die Anzahl der überzähligen Phasenverschiebungsperioden an. Diese werden erfindungsgemäß so gewählt, daß sich im Gitter $G_1$ für die Wellenlänge $\lambda_2$ eine optische Wegdifferenz von einem ganzzahligen Vielfachen von $\lambda_2$ ergibt und entsprechend im Gitter $G_2$ für die Wellenlänge $\lambda_1$. Das Phasengitter $G_1$ läßt also Licht der Wellenlänge $\lambda_2$ und das Phasengitter $G_2$ Licht der Wellenlänge $\lambda_1$ unbehindert durch. Die entsprechenden Phasengitter wirken für die "fremde" Wellenlänge, als ob sie nicht vorhanden wären. Solche ganzzahligen Werte $k_1$ bzw. $k_2$ ergeben sich, wenn

$$K_1 = \frac{\lambda_2}{\lambda_1} \cdot g_1 - \frac{\Delta\varphi_1}{2\pi} \quad und \quad K_2 = \frac{\lambda_1}{\lambda_2} \cdot g_2 - \frac{\Delta\varphi_2}{2\pi}$$

gewählt wird, wobei $g_1$ und $g_2$ wiederum ganze natürliche Zahlen sind.

Hat man geeignete, möglichst kleine Kombinationen von $k_1$, $k_2$, $g_1$ und $g_2$ ermittelt, ergeben sich die optischen Wegdifferenzen $S_1$ des gedachten Gitters $G_1$ und $S_2$ des gedachten Gitters $G_2$ zu:

$$S_1 = g_1 \cdot \lambda_2 \quad und \quad S_2 = g_2 \cdot \lambda_1$$

Bei Überlagerung der Stufenstrukturen der gedachten Gitter ergibt sich außer den Stufen $S_1$ und $S_2$ eine dritte Stufe $S_3 = S_1 + S_2$.

Bei entsprechenden geometrischen Stufenhöhen d eines Gitters ergeben sich dann wie folgt aus den optischen Wegdifferenzen S:
bei einem Reflexionsgitter in Luft: $d = S/2$
bei einem Reflexionsgitter in einem Träger mit dem

0193993
PHD 85-021 EP

Brechungsindex $n_T$ : $d = S/2 \cdot n_T$
bei einem Transmissionsgitter mit dem
Brechungsindex $n_G$ : $d = S/(n_G - 1)$

Damit die vom Überlagerungsgitter erzeugten Einzelstrahlen eindeutig an räumlich voneinander getrennten Stellen empfangen werden können, ist das Gitter $G_1$ so zu dimensionieren, daß es Licht der Wellenlänge $\lambda_1$ in ungerade Beugungsordnungen verteilt, während das Gitter $G_2$ Licht der Wellenlänge $\lambda_2$ in gerade Beugungsordnungen ablenkt. Dann folgen abwechselnd Teilstrahlen der Wellenlänge $\lambda_1$ und der Wellenlänge $\lambda_2$ räumlich mit Abstand aufeinander.

Die Überlagerungsstufe $d_3 = d_1 + d_2$ kann relativ große Werte annehmen. Dadurch können sich fertigungstechnische Probleme ergeben. Außerdem sind große Stufen auch optisch nachteilig.

Kleinere Stufenhöhen $d_3'$ für die Überlagerungsstufe eines Reflexionsgitters ergeben sich, wenn

$$d_3' = \frac{\lambda_2}{2}\left(\frac{\Delta\varphi_2}{2\pi} + \ell_2\right) = \frac{\lambda_1}{2} \cdot \left(\frac{\Delta\varphi_1}{2\pi} + \ell_1\right)$$

gewählt wird, wobei $l_1$ und $l_2$ ganze natürliche Zahlen sind. Ein theoretisches Optimum ergibt sich, wenn die Zahlenwerte $k_1$, $k_2$, $g_1$, $g_2$ bzw. $l_1$ und $l_2$ absolut ganzzahlig sind. Das läßt sich jedoch einerseits fertigungstechnisch nicht absolut genau realisieren, andererseits ergäben sich bei gewissen Frequenzverhältnissen unrealisierbar hohe Zahlenwerte. Die angegebenen Gleichungen ermitteln jedoch nur anzustrebende Idealwerte. Die der Erfindung zugrunde liegende Aufgabe wird mit praktisch hinreichendem Erfolg auch dann gelöst, wenn die Werte $k_1$, $k_2$, $g_1$, $g_2$, $l_1$ oder $l_2$ um $\pm$ 0,05 vom ganzzahligen Sollwert abweichen. Bei größeren Abweichungen muß insbesondere in Kauf genommen werden, daß die Leistungen der Teilstrahlen nicht mehr unbedingt gleich sind.

Die Erfindung wird anhand eines in der Zeichnung dargestellten Ausführungsbeispiels näher erläutert.

Fig. 1 zeigt die Struktur eines binären Phasengitters, welches Licht der Wellenlänge $\lambda_1$ auf ungerade Beugungsordnungen aufteilt,

Fig. 2 zeigt die Struktur eines binären Phasengitters, welches Licht der Wellenlänge $\lambda_2$ auf gerade Beugungsordnungen aufteilt,

Fig. 3 zeigt die Struktur eines erfindungsgemäß gestalteten Phasengitters und

Fig. 4 zeigt die Struktur eines vorteilhaft abgewandelten Phasengitters nach Fig. 3.

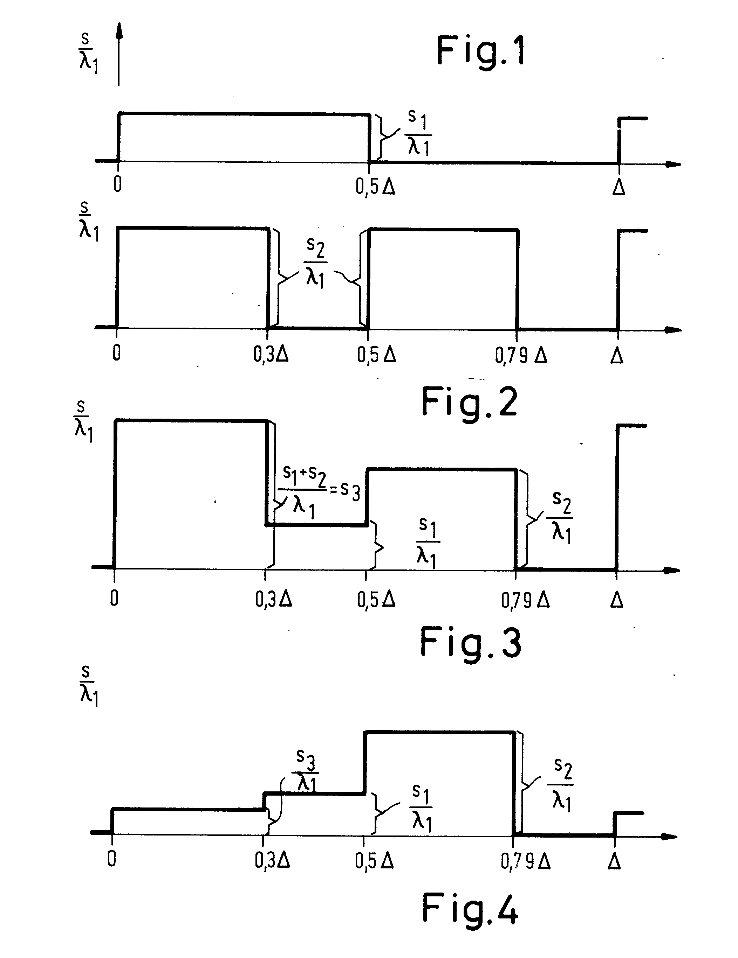

In den Fig. 1 bis 4 sind die Verläufe der Stufen d über einer Gitterperiode der Länge $\Delta \approx 50\,\mu m$ dargestellt.

Das in Fig. 1 dargestellte binäre Reflexions-Phasengitter $G_1$ hat die Stufenhöhe $d_1/\lambda_1 = 2,25$ mit $K_1 = 4$ und $\Delta\varphi_1/2\pi = 0,5$ und vermag Licht der Wellenlänge $\lambda_1$ in drei leistungsgleiche Teile aufzuspalten (ungerade Beugungsordnungen). Das binäre Reflexions-Phasengitter $G_2$ nach Fig. 2 hat mit $K_2 = 13$ und $\Delta\varphi_2/2\pi = 1/3$ zwei Stufen der Stufenhöhe $d_2/\lambda_1 = 5$ und vermag Licht der Wellenlänge $\lambda_2 = 0,75 \cdot \lambda_1$ in zwei leistungsgleiche Teile aufzuspalten (gerade Beugungsordnungen). Das Gitter $G_1$ ist dabei für Licht der Wellenlänge $\lambda_2$, das Gitter $G_2$ für Licht der Wellenlänge $\lambda_1$ beugungsfrei durchlässig.

Die geometrische Überlagerung der Strukturen der Gitter $G_1$ und $G_2$ ergibt ein Überlagerungsgitter gemäß der Erfindung nach Fig. 3, bei welchem außer den Stufenhöhen $d_1$ und $d_2$ eine Überlagerungsstufe mit der Stufenhöhe $d_3 = d_1 + d_2$ entstanden ist.

Die gleiche Wirkung wie mit einem Phasengitter nach Fig. 3 läßt sich erzielen, wenn nur die Stufenhöhe $d_3/\lambda_1$ auf den Wert $d_3'/\lambda_1 = 1,25$ nach Anspruch 2 verkleinert wird, wobei $l_1 = 2$ und $l_3 = 3$ gewählt sind.

In der folgenden Tabelle sind die Daten der Reflexions-Phasengitter (in Luft) nach den Fig. 3 und 4 ($\lambda_2/\lambda_1 = 0,75$) sowie dreier gleichartiger erfindungsgemäß gestalteter Gitter mit den Verhältnissen $\lambda_2/\lambda_1 = 0,55$, $0,65$ und $0,85$ dargestellt. Dabei ist jeweils $\Delta\varphi_1/2\pi = 0,5$ gewählt. Man erkennt, daß die Werte $d_3'/\lambda_1$ erheblich kleiner als $d_3/\lambda_1 = d_1/\lambda_1 + d_2/\lambda_1$ sind.

Tabelle:

| $\dfrac{\lambda_2}{\lambda_1}$ | $\dfrac{\Delta\varphi_2}{2\pi}$ | $K_1$ | $K_2$ | $g_1$ | $g_2$ | $l_1$ | $l_2$ | $\dfrac{d_1}{\lambda_1}$ | $\dfrac{d_2}{\lambda_1}$ | $\dfrac{d_3'}{\lambda_1}$ |
|---|---|---|---|---|---|---|---|---|---|---|
| 0,55 | 0,55 | 5 | 14 | 10 | 8 | 2 | 4 | 2,75 | 4 | 1,25 |
| 0,65 | 0,39 | 6 | 15 | 10 | 10 | 3 | 5 | 3,25 | 5 | 1,75 |
| 0,75 | 0,33 | 4 | 13 | 6 | 10 | 2 | 3 | 2,25 | 5 | 1,25 |
| 0,85 | 0,77 | 8 | 11 | 10 | 10 | 1 | 1 | 4,25 | 5 | 0,75 |

Es ist möglich, entsprechend den beschriebenen Gesetzmäßigkeiten kompakte resultierende Phasengitter aufzubauen, welche eingehendes Licht mit mehr als zwei Wellenlängen getrennt nach Wellenlängen in jeweils mehrere Leistungsbündel aufteilt. Bei drei Wellenlängen wären dann drei binäre Phasenstrukturen zu überlagern, welche jeweils für eine Wellenlänge eine beugende Wirkung haben, für die anderen beiden Wellenlängen jedoch beugungsfrei durchlässig wären. Dabei könnte eine der gedachten zu überlagernden Strukturen winkelversetzt zu den anderen überlagert werden. Da der Herstellungsaufwand für solche Gitter jedoch beträchtlich wäre und nur bei bestimmten Frequenzverhältnissen brauchbare niedrige Stufenhöhen erreichbar wären, wurde darauf verzichtet, Ausführungsbeispiele zu beschreiben.

**Patentansprüche:**

PATENTANSPRÜCHE

1. Digitales Phasengitter für einen optischen Leistungs- und Farbteiler, welcher ein Mischbündel aus optischen Signalen zweier verschiedener Wellenlängen $\lambda_1$ und $\lambda_2$ in Einzelbündel aufteilt, die räumlich voneinander getrennt sind und jeweils nur Signale einer einzigen Wellenlänge führen, wobei für jede Wellenlänge mindestens zwei Einzelbündel gebildet werden, dadurch gekennzeichnet, daß die Struktur des Phasengitters hinsichtlich Stufenbreite, optischer Wegdifferenz (Stufenhöhe) und Stufenabstand entsprechend einer Überlagerung zweidimensionaler Stufenstrukturen eines gedachten binären leistungsteilenden Phasengitters $G_1$ mit der optischen Wegdifferenz $S_1$, welches die Signale der Wellenlänge $\lambda_1$ in ungerade Beugungsordnungen zu verteilen vermag, sowie eines gedachten binären leistungsteilenden Phasengitters $G_2$ mit der optischen Wegdifferenz $S_2$, welches die Signale der Wellenlänge $\lambda_2$ in gerade Beugungsordnungen zu verteilen vermag, dimensioniert ist, so daß ein resultierendes Phasengitter mit den periodisch wiederkehrenden optischen Wegdifferenzen $S_1$, $S_2$ und $S_3 = S_1 + S_2$ entsteht, wobei die optischen Wegdifferenzen $S_1$ und $S_2$ wie folgt gewählt sind:

$$\frac{S_1}{\lambda_1} = \left( \frac{\Delta\varphi_1}{2\pi} + K_1 \right) \quad und \quad \frac{S_2}{\lambda_2} = \left( \frac{\Delta\varphi_2}{2\pi} + K_2 \right)$$

wobei $\Delta\varphi_1$ bzw. $\Delta\varphi_2 < 2\pi$ Phasensprungwinkel der gedachten binären Phasengitter und $k_1$ bzw. $k_2$ ganze natürliche Zahlen sind, welche folgenden Bedingungen genügen:

$$K_1 = \frac{\lambda_2}{\lambda_1} \cdot g_1 - \frac{\Delta\varphi_1}{2\pi} \quad und \quad K_2 = \frac{\lambda_1}{\lambda_2} \cdot g_2 - \frac{\Delta\varphi_2}{2\pi} \quad ,$$

wobei $g_1$ und $g_2$ wiederum ganze natürliche Zahlen sind.

2. Phasengitter nach Anspruch 1, dadurch gekennzeichnet, daß die Überlagerungswegdifferenz $S_3'$ kleiner als die Summe $S_1 + S_2$ ist und nach der Gleichung

$$S_3' = \lambda_2 \cdot \left( \frac{\Delta \varphi_2}{2\pi} + \ell_2 \right) = \lambda_1 \cdot \left( \frac{\Delta \varphi_1}{2\pi} + \ell_1 \right)$$

bemessen ist, wobei $l_1$ und $l_2$ ganze natürliche Zahlen sind.

3. Phasengitter nach Anspruch 1, dadurch gekennzeichnet, daß die Werte $K_1$, $K_2$, $g_1$ und $g_2$ um weniger als $\pm 0,05$ von ganzen natürlichen Zahlen abweichen.

4. Phasengitter nach Anspruch 2, dadurch gekennzeichnet, daß die Werte $l_1$ und $l_2$ um weniger als $\pm 0,05$ von ganzen natürlichen Zahlen abweichen.

0193993

## Fig.1

$\frac{s}{\lambda_1}$

$\left.\begin{array}{c}\end{array}\right\}\dfrac{s_1}{\lambda_1}$

0    0,5 Δ    Δ

$\frac{s}{\lambda_1}$

$\dfrac{s_2}{\lambda_1}$

0    0,3 Δ    0,5 Δ    0,79 Δ    Δ

## Fig.2

$\frac{s}{\lambda_1}$

$\dfrac{s_1+s_2}{\lambda_1}=s_3$

$\dfrac{s_1}{\lambda_1}$

$\dfrac{s_2}{\lambda_1}$

0    0,3 Δ    0,5 Δ    0,79 Δ    Δ

## Fig.3

$\frac{s}{\lambda_1}$

$\dfrac{s_3}{\lambda_1}$

$\dfrac{s_1}{\lambda_1}$

$\dfrac{s_2}{\lambda_1}$

0    0,3 Δ    0,5 Δ    0,79 Δ    Δ

## Fig.4

PHD 85 — 021